# EUROPÄISCHE PATENTANMELDUNG

(11) **EP 1 944 472 A1**
(43) Veröffentlichungstag der Anmeldung: **16.07.2008**
(21) Anmeldenummer: 07000382.7
(22) Anmeldetag: 09.01.2007
(51) Int. Cl.: F01D 5/30, F01D 11/00

(54) **Axialer Rotorabschnitt für einen Rotor einer Turbine, Dichtelement für einen mit Laufschaufeln bestückten Rotor einer Turbine und Rotor für eine Turbine**

(71) Anmelder: SIEMENS AKTIENGESELLSCHAFT, 80333 München (DE)
(72) Erfinder: Engle, Darren T., 32817 Orlando, FL 32817 (US); Hoell, Harald, 63607 Wächtersbach (DE); Krützfeldt, Joachim, 45481 Mülheim an der Ruhr (DE); Schröder. Peter, 45307 Essen (DE)

(57) **Zusammenfassung**

Die Erfindung betrifft eine Befestigung von Laufschaufeln (58) an einem Rotor (65) einer Gasturbine, bei der die in axialen Laufschaufelhaltenuten (18) sitzenden Laufschaufeln (58) gegen eine Verschiebung durch ein stirnseitig an der Rotorscheibe (10) befestigtes Dichtelement (32) zuverlässig gesichert sind. Um eine zuverlässige Abdichtung bei schneller Montierbarkeit und Demontierbarkeit der Dichtelemente (32) und der Laufschaufeln (58) zu erreichen, liegt jedes Dichtelement (32) mit einer an seiner Innenkante (36) angeordneten unterbrechungslosen Anlagefläche (46) an einem stirnseitigen endlos umlaufenden Vorsprung (28) rotorseitig an.

## Beschreibung

Die Erfindung betrifft einen axialen Rotorabschnitt für einen Rotor einer Turbine, mit einer äußeren an zwei stirnseitigen ersten Seitenflächen angrenzenden Umfangsfläche, in der über den Umfang verteilte, sich in Axialrichtung des Rotors erstreckende Laufschaufelhaltenuten für Laufschaufeln der Turbine vorgesehen sind und mit einer radial weiter innen zu einer der beiden ersten Seitenflächen benachbarten weiteren Umfangsfläche, in der eine radial nach außen offene, in Umfangsrichtung erstreckende Dichtungsnut zur Aufnahme von Dichtelementen vorgesehen ist. Ferner betrifft die Erfindung ein Dichtelement für einen mit Laufschaufeln bestückten Rotor einer Turbine, umfassend einen plattenförmigen, im Wesentlichen viereckigen Grundkörper, der zwischen einer in einer Betriebslage radial innen vorgesehenen Innenkante und einer in einer Betriebslage radial außen vorgesehenen Außenkante einen Mittenbereich mit im Wesentlichen gleich bleibender Wandstärke aufweist. Ferner betrifft die Erfindung einen Rotor für eine Turbine mit einem gattungsgemäßen Rotorabschnitt und mit in Laufschaufelhaltenuten eingesetzten Laufschaufeln.

Ein gattungsgemäßer axialer Rotorabschnitt für eine Turbine bzw. ein gattungsgemäßer Rotor ist beispielsweise aus der Offenlegungsschrift DE 1 963 364 bekannt. Der von einer Rotorscheibe gebildete Rotorabschnitt ist mit in Axialrichtung verlaufenden Haltenuten für Laufschaufeln der Turbine ausgestattet, wobei stirnseitig eine endlos umlaufende Aufnahmenut für Dichtbleche vorgesehen ist. An einer Seitenwand der Aufnahmenut sind mehrere in Umfangsrichtung gleichmäßig verteilte Vorsprünge vorgesehen, die den Nutgrund der Aufnahmenut teilweise überdecken. Ferner ist aus der Offenlegungsschrift ein plattenförmiges Dichtblech bekannt, welches an seiner radial innen angeordneten Innenkante eine beidseitige Aufdickung aufweist, die annähernd der Nutbreite der Aufnahmenut entspricht. Die Aufdickung ist dabei in Umfangrichtung betrachtet, abschnittsweise von Ausnehmungen unterbrochen, welche zu den Vorsprüngen der Aufnahmenut korrespondierend breit ausgebildet sind. Hierdurch lässt sich das Dichtblech durch eine rein radiale Bewegung von Außen in die Aufnahmenut einsetzen und nach einer Verschiebung in Umfangsrichtung, welche ungefähr der Breite des Vorsprungs entspricht, mit diesem verhaken. Die Aufdickung des Dichtbleches hintergreift dann die Vorsprünge der Aufnahmenut, so dass das Dichtblech sich nicht nach außen bewegen kann. Zur Montage aller Dichtbleche sind diese sukzessive in die Aufnahmenut einzusetzen und erst anschließend gemeinschaftlich in Umfangsrichtung zu verschieben. Hierdurch wird die Notwendigkeit eines Dichtblechschlosses vermieden. Nach dem Einsetzen und Verschieben der Dichtbleche werden die Laufschaufeln in ihre Nuten eingeschoben. Anschließend werden die Außenkanten der Dichtbleche in plattformseitige Nuten der Laufschaufeln eingeschoben, so dass diese gegen eine Axialverschiebung gesichert sind. Zum Abschluss der Montage werden die Dichtbleche mittels einer Schraube in ihrer angehobenen Stellung fixiert. Jede Aufweitung liegt dann am Vorsprung an. Mittels dieser Anordnung der Bauteile kann ein erster Raum, welcher zwischen dem Dichtblech und der Stirnseite der Rotorscheibe liegt, gegenüber einem zweiten, andererseits des Dichtbleches liegenden, zweiten Raum zur Führung unterschiedlicher Medien abgetrennt werden. Zur Erreichung einer besonders guten Abdichtung liegt das Dichtblech mit seiner Aufweitung an derjenigen Seitenwand der Aufnahmenut an, an welcher kein Vorsprung vorgesehen ist. Außerdem sorgt eine innere, konisch verlaufende Kante des Vorsprungs dafür, dass das Dichtblech unter Fliehkrafteinfluss an die vorsprunglose Seitenwand der Aufnahmenut gepresst wird.

Ein Nachteil der bekannten Anordnung ist die aufwändige Konstruktion der Seitenflächen der Rotorscheibe und des Dichtbleches mit Vorsprüngen und Ausnehmungen. Ein weiterer Nachteil ist die Verwendung einer Schraube zur Sicherung der Dichtbleche gegen eine Verschiebung in Umfangsrichtung. Aufgrund der zwischen Betrieb und Stillstand auftretenden thermischen Wechselbeanspruchung und aufgrund des durch die Turbine strömenden Heißgases kann es zu Korrosions- und Festigkeitsproblemen in der Verschraubung kommen. Unter Umständen kann diese nicht bestimmungsgemäß gelöst werden. In diesem Fall wird die Schraube ausgebohrt, wobei dieser Vorgang in der Regel am noch in der unteren Gehäusehälfte der Gasturbine liegenden Rotor durchgeführt wird. Dabei kann es passieren, dass Späne in die untere Gehäusehälfte fallen, welche beim nachfolgenden Betrieb ungewollte Verunreinigungen herbeiführen können.

Ferner ist aus der FR 2 524 933 eine Sicherung für Laufschaufeln gegen eine Axialverschiebung bekannt, die mittels eines in Umfangsrichtung verschiebbaren Bleches gehalten werden. Die darin gezeigte Anordnung ist jedoch nicht geeignet, einen scheibennahen Raum gegenüber einem jenseits des Bleches vorhandenen Raum abzudichten.

Des Weiteren ist aus der Offenlegungsschrift DE 30 33 768 A1 eine Läuferbaugruppe für eine Läuferscheibe einer Turbine bekannt, welche einen einstückigen Dichtring zur Axialsicherung von Laufschaufeln aufweist. Aufgrund des einstückigen Dichtrings ist dieser jedoch lediglich für Flugzeuggasturbinen geeignet, da diese in Axialrichtung durch Stapeln zusammengesetzt werden. Stationäre Gasturbinen werden dagegen aus zwei Gehäusehälften zusammengesetzt, die den vollständig montierten Rotor umgreifen. Der einstückige Dichtring der DE 30 33 768 A1 wird nach Art eines Bajonett-Verschlusses mit der Turbinenscheibe verhakt. Hierzu sind sowohl an der Turbinenscheibe als auch am Dichtring entlang des Umfang verteilte Vorsprünge und Ausnehmungen abwechseln angeordnet. Zur Montage wird der Dichtring an der Rotorscheibe angelegt, wobei die Ausnehmungen und Vorsprünge einander gegenüberliegen. Anschließend können diese durch eine geringfügige Verdrehung beider Teile gegeneinander miteinander verhakt werden.

Die Aufgabe der Erfindung ist daher die Bereitstellung eines axialen Rotorabschnittes für eine stationäre Turbine und die Bereitstellung eines Dichtelementes für eine mit Laufschaufeln bestückten Rotor einer Turbine, welche im Hinblick auf den Ein- und Ausbau von Dichtelementen und von Laufschaufeln verbessert ist.

Die auf dem Rotorabschnitt gerichtete Aufgabe wird gelöst durch einen gattungsgemäßen Rotorabschnitt, der den Merkmalen des Anspruchs 1 entspricht. Des Weiteren wird die auf das Dichtelement gerichtet Aufgabe mit einem Dichtelement gemäß Anspruch 7 gelöst. Die auf den Rotor gerichtete Aufgabe wird mit einem Rotor gelöst, der den Merkmalen des Anspruchs 14 entspricht.

Die Erfindung geht von der Erkenntnis aus, dass das Dichtelement nicht ausschließlich durch eine radiale Bewegung oder durch eine ausschließliche Axialbewegung in die Dichtungsnut einsetzbar ist, sondern aufgrund einer kombinierten radialen und axialen, also schrägen Bewegung eingesetzt werden kann. Die wulstartige Aufdickung wird dabei in den Bereich der Hinterschneidung des Vorsprungs hineinbewegt. Anschließend wird durch Schwenken der Aussenkante des Dichtelements zur ersten Seitenfläche des Rotorabschnittes hin das Dichtelement ausgerichtet. Dadurch ist es möglich, die bisher sowohl am Dichtelement als auch am axialen Rotorabschnitt vorgesehenen Ausnehmungen und Vorsprünge, welche kostenintensiv zu fertigen sind, zu eliminieren. Erfindungsgemäß ist der am Rotorabschnitt vorgesehene Vorsprung in Umfangsrichtung endlos umlaufend, bei vorzugsweise konstanter axialer Breite. Auch die innenkantenseitige Aufweitung des Dichtelements erstreckt sich ohne Unterbrechungen über die Gesamtlänge der Innenkante. Hierdurch können besonders einfach zu fertigende Bauteile, d.h. Rotorabschnitt und Dichtelement, angegeben werden. Sofern alle Dichtelemente für den betreffenden axialen Rotorabschnitt und alle Laufschaufeln montiert sind, ist je Dichtelement eine nach außen gerichtete Fläche jeder Aufweitung als Anlagefläche an der vom Vorsprung gebildeten Hinterschneidung ohne Unterbrechungen anlegbar, um das unter Fliehkrafteinwirkung nach außen strebende Dichtelement am Vorsprung dicht anzulegen.

Dadurch ist es möglich, ein durch das Rotorinnere den Laufschaufeln zur Verfügung gestelltes Kühlmittel auch in einem zwischen der ersten Seitenfläche der Rotorscheibe und dem Dichtelement liegenden ersten Raum annähernd leckagefrei zu führen. Die Leckage von Kühlmittel durch die Dichtungsnut in einen andererseits des Dichtelementes liegenden zweiten Raum kann somit reduziert und gegebenenfalls vermieden werden. Der zweite Raum ist auch als Scheibenzwischenraum bekannt.

Vorteilhafte Ausgestaltungen sind in den Unteransprüchen angegeben.

In einer vorteilhaften Weiterbildung des Rotorabschnittes ist in der weiteren Umfangsfläche eine Sicherungsnut angeordnet, welche zur Aufnahme eines Sicherungsbleches vorgesehen ist. Des Weiteren ist für jedes zu montierende Dichtelement ein Loch in einer zweiten Seitenfläche vorgesehen, welches in Axialrichtung erstreckend die Seitenwände der Sicherungsnut und der Dichtungsnut durchdringt.

Es ist von besonderem Vorteil, wenn beiderseits der ersten Seitenfläche jeweils eine radial weiter innen liegende weitere Umfangsfläche mit jeweils einer Dichtungsnut und einer Sicherungsnut vorgesehen ist. Somit können die in den Laufschaufelhaltenuten angeordneten Laufschaufeln beidseits des axialen Rotorabschnittes gegen eine Verschiebung innerhalb ihrer Haltenut gesichert werden. Gleichzeitig wird jeder der jeweils zwischen den Dichtelementen und den ersten Seitenflächen der Rotorscheibe liegenden ersten Räume gegenüber den zweiten, jenseits der Dichtelemente vorhandenen Räumen, getrennt.

In zweckmäßiger Weise wird der Rotorabschnitt von einer Rotorscheibe gebildet, bei der vorzugsweise die weitere Umfangsfläche von jeweils einer an der Rotorscheibe stirnseitig umlaufenden Stufe gebildet ist. Hierdurch ist eine besonders einfach zu fertigende Rotorscheibe angegeben, in der die Nuten in der Stufe kostengünstig durch Drehen hergestellt werden können. Unter Drehen ist hierbei die spannende Bearbeitung eines rotationssymmetrischen Körpers verstanden.

Das an den axialen Rotorabschnitt zu montierende Dichtelement weist vorzugsweise in dem Bereich seiner Außenkante ein sich quer zur Radialrichtung erstreckenden Überhang auf. Der Überhang, welcher auch als "angel wing" bekannt ist, dient zur Abdichtung des vom "angel wing" radial weiter innen liegenden zweiten Raumes gegenüber einem Heißgasraum, welcher in der Regel außerhalb des Überhangs als Ringkanal der Turbine vorgesehen ist.

Im zweiten Raum, dem Scheibenzwischenraum, ist üblicherweise ein feststehender Befestigungsring vorgesehen, welcher an den kopfseitigen Enden der Leitschaufeln befestigt ist und welcher dabei jeweils den Rotor der Turbine ringförmig umgreift. Am drehfesten Befestigungsring angeordnete Dichtflächen stehen dem im Betrieb rotierenden Überhang des Dichtelementes spaltbildend gegenüber. Um eine besonders gute Abdichtung des Spaltes zu erzielen, ist am Überhang vorzugsweise eine nach außen gerichtete Dichtspitze vorgesehen, welche den Spalt labyrinthartig abdichtet. Hierdurch kann der Einzug von Heißgas aus dem Ringkanal in den zwischen Dichtelement und Befestigungsring liegenden zweiten Raum verhindert werden.

In einer weiteren vorteilhaften Ausgestaltung weist das Dichtelement im Mittenbereich einen oder mehrere Abstandshalter auf, welche beispielsweise in Form von Nocken ausgebildet sein können. Da der Mittenbereich des Dichtelements zur ersten Seitenfläche der Rotorscheibe mit einem geringen Maß beabstandet ist und die Laufschaufel einen entsprechend der axialen Länge der Laufschaufelhaltenut langen Laufschaufelfuß aufweist, kann die Verschiebung der Laufschaufel in Axialrichtung sicher unterbunden werden, wenn der Abstandshalter an der stirnseitigen Seitenwand des Laufschaufelfußes anliegt. Die Laufschaufel sitzt dann auch im Bereich des Schaufelfußes spielfrei in ihrer Haltenut.

Des Weiteren weist vorzugsweise das Dichtelement im Bereich der Innenkante eine Ausnehmung zur Aufnahme eines Sicherungselementes auf. Ein Wandern der Dichtelemente in Umfangsrichtung wird durch einen in die Ausnehmung eingreifenden, im Rotorabschnitt eingesetzten Bolzen vermieden, was auch den Verschleiß sowohl am Dichtelement als auch an den Nuten, in denen das Dichtelement sitzt, minimiert. Außerdem wird so jedes einzelne Dichtelement gegen ungewolltes Lösen gesichert.

Vorzugsweise weist der Rotor Laufschaufeln auf, die mit einer Plattform ausgestattet sind. An jeder Plattform ist eine dem Dichtelement zugewandte Plattformunterseite mit einer in Umfangsrichtung verlaufenden Plattformnut vorgesehen, in die zumindest eines der Dichtelementes mit seiner Außenkante eingreifen kann.

In vorteilhafter Weiterbildung bilden alle an einer Stirnseite des Rotorabschnitts vorgesehenen Dichtelemente einen segmentierten Ring. Dabei bilden die Anlageflächen der Dichtelemente gemeinschaftlich am umlaufenden Vorsprung einen geschlossenen Dichtring. Hierdurch kann eine besonders effiziente Trennung der Räume beidseits des Dichtelementes erfolgen, damit die beim Betrieb darin auftretenden Mittel getrennt führbar sind.

Um einen Rotor anzugeben, bei dem verschlissene Laufschaufeln mit vergleichsweise geringem Aufwand demontiert werden können, weist dieser für mindestens eine seiner Stirnseiten eine identische Anzahl von Laufschaufeln und Dichtelementen auf. Dadurch wird gewährleistet, dass maximal zwei benachbarte Dichtelemente, die je eine Laufschaufelhaltenut jeweils hälftig überdecken, dem Rotor entnommen werden müssen, um die betreffende Laufschaufel freizugeben.

Da die plattenförmigen Dichtelemente in Umfangsrichtung betrachtet aneinander liegen, ist der von den aneinander liegenden Seitenkanten gebildete Spalt bestmöglich abzudichten. Hierzu wird vorgeschlagen, dass die beiden Seitenkanten jedes Dichtelementes, die jeweils die Außenkante und die Innenkante miteinander verbinden, jeweils eine Wandstärke aufweist, die ungefähr der halben Wandstärke des Mittenbereichs entspricht. Hierdurch ist eine überlappende Anordnung von Seitenkanten benachbarter Dichtelemente möglich. Bevorzugtermaßen liegen die überlappenden Seitenkanten benachbarter Dichtelemente flächig aneinander an, so dass die Kontaktfläche vergrößert werden kann. Der von den aneinander liegenden Seitenkanten eingeschlossene Spalt, sofern vorhanden, ist zudem labyrinthartig ausgebildet. Für den Fall, dass ein zwischen dem Dichtelement und der ersten Seitenfläche des Rotorabschnittes geführtes Kühlmittel dadurch austritt, entstehen dabei Strömungswirbel im Leckagestrom, welche die Strömung selber wiederum behindern. Folglich kann nur ein sehr geringer, zu vernachlässigender Anteil des Kühlmittels durch diese labyrinthartigen Spalte entweichen.

Vorteilhafte Ausgestaltungen und Wirkungen werden in der Figurenbezeichnung angegeben. Gleichbleibende Elemente werden dabei mit identischen Bezugszeichen versehen.
- FIG 1: zeigt den Querschnitt durch den äußeren Umfang einer Rotorscheibe für die Turbine einer Gasturbine,
- FIG 2: zeigt in perspektivischer Darstellung ein plattenförmiges Dichtelement gemäß der Erfindung,
- FIG 3: zeigt den Querschnitt durch den Rotor der Gasturbine mit eingesetzten Turbinenlaufschaufeln sowie stirnseitig angeordneten Dichtelementen,
- FIG 4: zeigt in den Darstellungen a bis f die Montageschritte für das an einen Rotorabschnitt gemäß FIG 1 zu befestigenden Dichtelement,
- FIG 5: zeigt einen Ausschnitt aus einem Querschnitt durch die Turbinenschaufel und das Dichtblech,
- FIG 6: zeigt das an einer Rotorscheibe angeordnete Dichtelement unter Ausblendung der Laufschaufel,
- FIG 7: zeigt einen Querschnitt durch die Rotorscheibe mit befestigtem Dichtelement und Turbinenlaufschaufel und
- FIG 8: zeigt die entlang des Umfangs überlappenden Dichtelemente in einer Draufsicht.

Gasturbinen und deren Wirkungsweisen sind allgemein bekannt. Die Rotoren der Gasturbinen können beispielsweise aus mehreren aneinander liegenden Rotorscheiben gebildet sein, die mit einem zentralen oder auch mit mehreren dezentralen Zugankern verspannt sind. Jeder Rotor umfasst somit mehrere Rotorabschnitte, die jeweils von einer Rotorscheibe gebildet sein können.

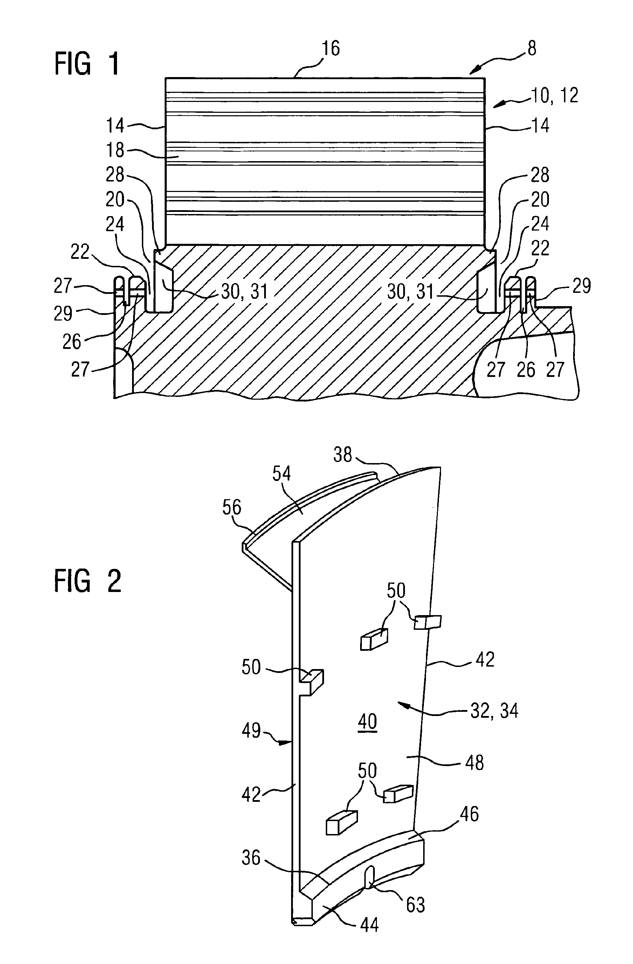

FIG 1 zeigt den Querschnitt durch den äußeren Bereich 8 einer erfindungsgemäßen Rotorscheibe 10, welche einen axialen Abschnitt 12 des Turbinenrotors darstellt. Die Rotorscheibe 10 weist eine nicht dargestellte Nabenbohrung zur Aufnahme des zentralen Zugankers auf. Der äußere Bereich 8 der Rotorscheibe 10 wird von zwei gegenüberliegenden stirnseitigen ersten Seitenflächen 14 gebildet, die durch eine Umfangsfläche 16 miteinander verbunden sind. Entlang des Umfangs sind mehrere Laufschaufelhaltenuten 18 gleichmäßig verteilt. Der Schnitt durch die Rotorscheibe 10 ist dabei so gelegt, dass dieser durch eine der in der Umfangsfläche 16 vorgesehenen Laufschaufelhaltenuten 18 verläuft. Jede im Querschnitt tannenbaumförmige Laufschaufelhaltenut 18 erstreckt sich in Axialrichtung des Rotors und ist dabei sowohl radial außen als auch axial stirnseitig offen. Die Laufschaufelhaltenut 18 ist zur Aufnahme einer Laufschaufel der Turbine vorgesehen.

Im dargestellten Beispiel sind zu den beiden ersten Seitenflächen 14 radial weiter innen benachbarte weitere Umfangsflächen 22 vorgesehen. Die Umfangsfläche 22 kann beispielsweise, wie links an der Rotorscheibe 10 dargestellt, durch eine Stufe geformt sein. In der Umfangsfläche 22 ist eine radial nach außen offene, in Umfangsrichtung erstreckende Dichtungsnut 24 vorgesehen. In oder über der Öffnung 20 jeder Dichtungsnut 24 ist ein endlos umlaufender stirnseitiger Vorsprung 28 vorgesehen, der die Öffnung 20 der Dichtungsnut 24 in Axialrichtung jeweils zumindest teilweise unter Bildung einer Hinterschneidung 30 überdeckt. Der Vorsprung 28 weist eine zur Dichtungsnut 24 weisende Anlagefläche 31 auf.

Zur Dichtungsnut 24 benachbart ist in jeder weiteren Umfangsfläche 22 eine ebenfalls endlos umlaufende Sicherungsnut 26 vorgesehen. In dieser Sicherungsnut 26 können - später gezeigte - Sicherungsbleche montiert werden, mittels denen Bolzen und Dichtelemente gesichert werden. Für die Bolzen sind sich in Axialrichtung des Rotors erstreckende Löcher 27 vorgesehen, die die Seitenwände der Sicherungsnut 26 und eine der Seitenwand der Dichtungsnut 24 jeweils durchdringen. Die Löcher 27 erstrecken sich dabei jeweils auch durch zweite Seitenflächen 29 der Rotorscheibe 10.

Sowohl die Dichtungsnut 24 als auch die Sicherungsnut 26 können anstelle von einer Stufe auch von nach außen hervorstehenden Vorsprüngen gebildet werden, die an einem Balkon vorgesehen sind. Dies ist in FIG 1 auf der rechten Seite der Rotorscheibe 10 dargestellt.

Jede Dichtungsnut 24 ist zur Aufnahme von Dichtelementen 32 vorgesehen, welche in FIG 2 in perspektivischer Darstellung gezeigt sind. Das Dichtelement 32 umfasst einen plattenförmigen, im Wesentlichen viereckigen Grundkörper 34, der zwischen einer in einer Betriebslage radial innen vorgesehenen Innenkante 36 und einer in einer Betriebslage radial außen vorgesehenen Außenkante 38 einen Mittenbereich 40 aufweist. Der Mittenbereich 40 wird von zwei Seitenwänden 48, 49 gebildet, die im Wesentlichen einen gleich bleibenden Abstand zueinander aufweisen, d.h. die Wandstärke des Mittenbereiches 40 ist im Wesentlichen konstant. Die Innenkante 36 und die Außenkante 38 sind über zwei geradlinige Seitenkanten 42 miteinander verbunden. Die Innenkante 36 weist gegenüber dem Mittenbereich 40 eine wulstartige Aufweitung 44 unter Bildung einer nach außen gerichteten Anlagefläche 46 auf. Die Aufweitung 44 und die Anlagefläche 46 erstrecken sich über die gesamte in Umfangsrichtung verlaufende Länge der Innenkante 36 und verlaufen somit unterbrechungslos zwischen den beiden Seitenkanten 42.

Die Aufweitung 44 ist dabei lediglich an derjenigen Seitenwand 48 des Dichtelementes 32 vorgesehen, welche in einer Betriebslage der ersten Seitenfläche 14 des Rotorabschnitts 12 gegenüberliegt. Auf der der ersten Seitenfläche 14 abgewandten Seitenwand 49 des Dichtelementes 32 geht der Mittenbereich 40 versatzfrei in die Innenkante 36 über.

Des Weiteren sind am Dichtelement 32 mehrere, sowohl in Umfangsrichtung als auch in Radialrichtung zueinander beabstandeten Abstandshalter 50 vorgesehen. Diese sind dabei auf derjenigen Seitenwand 48 des Dichtelementes 32 angeordnet, welcher der ersten Seitenfläche 14 des Rotorabschnittes 12 zugewandt ist.

Auf der zur ersten Seitenfläche 14 des Rotorabschnitts 12 abgewandten Seitenwand 49 des Dichtelementes 32 ist im Bereich der Außenkante 38 ein sich quer zur Radialrichtung erstreckender Überhang 54 vorgesehen. Der Überhang 54 weist dabei eine in Umfangsrichtung verlaufende, nach außen gerichtete Dichtspitze 56 auf.

Des Weiteren weist das Dichtelement 32 im Bereich der Innenkante 36 eine Ausnehmung 63 zur Aufnahme eines Sicherungselementes auf. Die Ausnehmung 63 ist dabei derartig angeordnet, dass diese die äußere Anlagefläche 46 der Aufweitung 44 nicht unterbricht. Vorzugsweise ist die Ausnehmung 63 als Sackloch ausgebildet und nur auf derjenigen Seitenwand 49 angeordnet, welcher der ersten Seitenfläche 14 der Rotorscheibe 10 abgewandt ist. Der Klarheit halber ist jedoch eine durchgängige Ausnehmung gezeichnet.

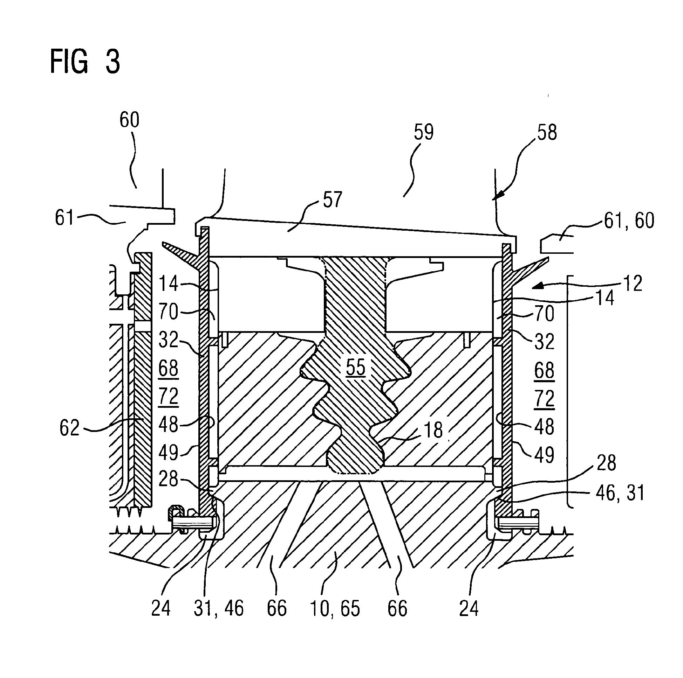

FIG 3 zeigt wie FIG 1 den Querschnitt durch den äußeren Bereich einer Rotorscheibe 10, wobei auch eine in einer Laufschaufelhaltenut 18 angeordnete Laufschaufel 58 dargestellt ist. Die Laufschaufel 58 weist einen rotorseitigen Fuß 55 auf, an dem sich eine Plattform 57 und daran anschließend ein aerodynamisch profiliertes Schaufelblatt 59 einstückig anschließt.

Der Fuß 55 der Laufschaufel 58 ist im Querschnitt tannenbaumförmig und korrespondiert zu der Tannenbaumform der Laufschaufelhaltenut 18. Die Schemadarstellung der Kontur des Laufschaufelfußes 55 und die der Laufschaufelhaltenut 18 ist in FIG 3 gegenüber der restlichen Anordnung um 90° gedreht wiedergegeben. Somit erstreckt sich auch die in der Figur 3 dargestellte Laufschaufelhaltenut 18, wie in FIG 1 korrekter Weise dargestellt, zwischen den beiden ersten Seitenflächen 14 des axialen Rotorabschnittes 12.

Des Weiteren sind kopfseitige Enden 61 von Leitschaufeln 60 schematisch angedeutet, die, in Strömungsrichtung des Arbeitsmediums der Gasturbine betrachtet, stromauf und stromab der Laufschaufel 58 angeordnet sind. Die Leitschaufeln 60 sind dabei strahlenförmig in Kränzen angeordnet. Die Leitschaufeln 60 eines jeden Kranzes sind durch einen kopfseitig vorgesehenen Befestigungsring 62 stabilisiert. Der Befestigungsring 62 umgreift den Rotor 65 der Gasturbine vollständig und wird von den drehfesten Leitschaufeln 60 getragen. Der Befestigungsring 62 ist dabei in einen Freiraum 68 angeordnet, der zwischen den ersten Seitenflächen 14 benachbarter Rotorscheiben 10 liegt.

Durch beidseitig der Rotorscheibe 10 in den Dichtungsnuten 24 eingesetzte Dichtelemente 32 ist die Laufschaufel 58 gegen axiales Verschieben innerhalb der Laufschaufelhaltenut 18 gesichert.

Der Freiraum 68 wird durch das Dichtelement 32 in zwei Räume 70, 72 unterteilt. Der erste Raum 70 ist axial von der Seitenwand 48 des Dichtelements 32 und von der dieser Seitenwand 48 gegenüberliegenden ersten Seitenfläche 14 des Rotorabschnittes 12 begrenzt. Der zweite Raum 72 entspricht dem restlichen Freiraum 68 und wird teilweise von der Seitenwand 49 des Dichtelementes 32 begrenzt.

Des Weiteren sind in der Rotorscheibe 10 Kühlkanäle 66 zur Führung von Kühlmittel vorgesehen.

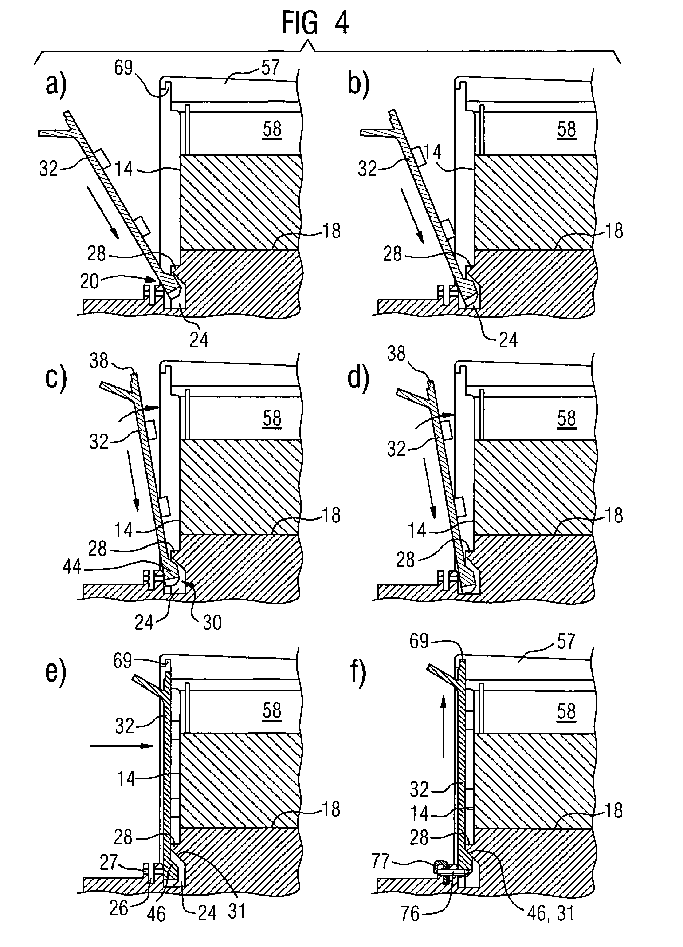

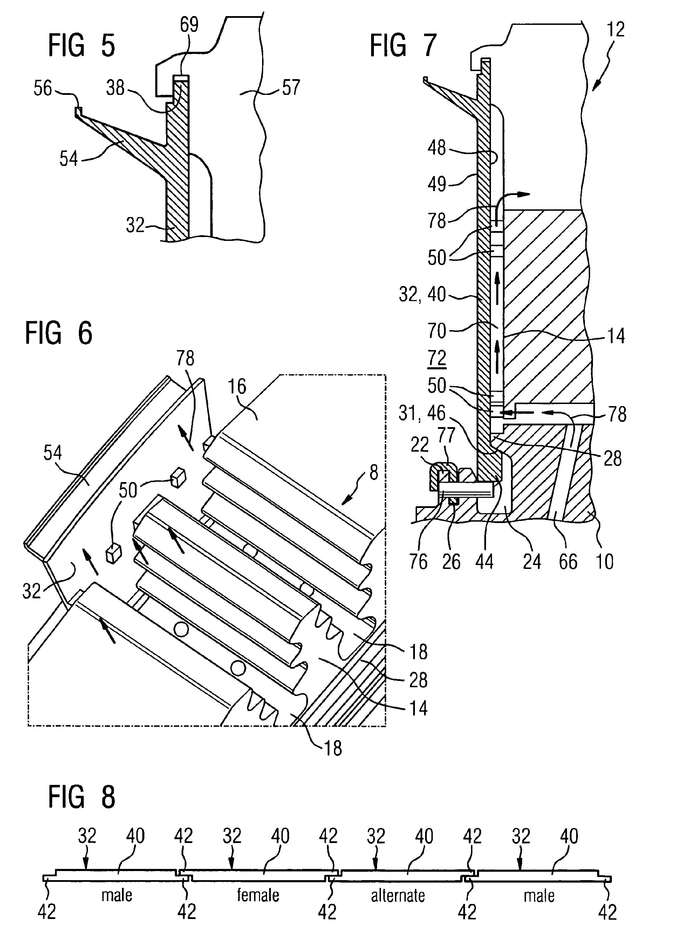

Die Montage des Dichtelementes 32 ist in FIG 4 in Schritten a) bis f) dargestellt, wobei bereits am Rotorabschnitt 12 die Laufschaufel 58 in die Laufschaufelhaltenut 18 eingeschoben ist. In den Figuren FIG 4a und FIG 4b ist gezeigt, dass das Dichtelement 32 durch eine kombinierte Radial- und Axialbewegung in die Dichtungsnut 24 eingeschoben werden kann, obwohl der Vorsprung 28 die Öffnung 20 der Dichtungsnut - in radialer Richtung betrachtet - teilweise überdeckt. Nachdem die Aufweitung 44 des Dichtelementes 32 im Bereich der Hinterschneidung 30 des Vorsprungs 28 ist (FIG 4c), kann die Außenkante 38 des Dichtelementes 32 zur korrespondierenden ersten Seitenfläche 14 hin bewegt werden, wodurch das Dichtelement 32 zur ersten Seitenfläche 14 geschwenkt wird (FIG 4d und FIG 4e). Das sich dann annähernd parallel zur ersten Seitenfläche 14 befindliche Dichtelement 32 wird anschließend geringfügig nach außen bewegt - also angehoben -, bis die äußere Anlagefläche 46 der Aufweitung 44 an der inneren Anlagefläche 31 des Vorsprungs 28 anliegt (FIG 4f). Beim Anheben des Dichtelementes 32 bewegt sich die Außenkante 38 des Dichtelementes 32 in eine an der Unterseite der Plattform 57 angeordnete Plattformnut 69 (vgl. FIG 5).

Durch einen als Sicherungselement sich in Axialrichtung erstreckenden Bolzen 76 kann das angehobene Dichtelement 32 in seiner Betriebsposition befestigt werden. Der im Loch 27 sitzende Bolzen 76 sichert dabei das Dichtelement 32 gegen eine Bewegung in Umfangsrichtung und ist gleichzeitig zur sicheren Verbindung der Anlagefläche 46 an der inneren Fläche 31 des Vorsprungs 28 verantwortlich. Der Bolzen 76 greift dabei in die an der Innenkante 36 angeordnete Ausnehmung 63 ein. Der Bolzen 76 ist dabei selber durch ein in der Sicherungsnut 26 eingesetztes Sicherungsblech 77 gegen Verlust gesichert, indem dieses vom Bolzen 76 gehalten das in der zweiten Seitenfläche 29 vorhandene Loch 27 abdeckt.

Das Dichtelement 32, der Vorsprung 28, die Aufweitung 44 sowie die Anlagefläche 46 in Verbindung mit der Plattformnut 69, welche einer Unterseite der Plattform 57 vorgesehen ist, sind dabei derart ausgelegt, dass die beim Betrieb vom Dichtelement 32 ausgehende Fliehkraftbelastung ausschließlich vom Vorsprung 28 aufgenommen wird. Die Außenkante 38 des Dichtelementes 32 liegt folglich selbst unter Fliehkrafteinwirkung nicht an dem Nutgrund der Plattformnut 69 an (FIG 5). Es ist somit stets gewährleistet, dass zwischen der Außenkante 38 und dem Nutgrund der Plattformnut 69 ein Spalt vorhanden ist, um die Laufschaufel als auch deren Plattform beim Betrieb mechanisch zu entlasten. Dies verlängert die Lebensdauer der Laufschaufel 58.

FIG 7 zeigt die Strömung des Kühlmittels 78, welches durch das Rotorscheibeninnere, d.h. durch die Kühlkanäle 66 dem Fuß 55 der Laufschaufel 58 zuführbar ist. Die Kühlkanäle 66 enden im Nutgrund der Laufschaufelhaltenut 18, wobei bei eingesetzter Laufschaufel 58 ein geringer Freiraum zwischen Laufschaufelfuß 55 und Nutgrund verbleibt, damit das Kühlmittel 78 aus den Kühlkanälen 66 austreten und in Axialrichtung zu den ersten Seitenflächen 14 des Rotorabschnittes 12 geführt werden kann. Das Kühlmittel 78 tritt oberhalb des Vorsprungs 28 aus den stirnseitigen Öffnungen der Laufschaufelhaltenuten 18 aus und wird dann entlang des ersten Raumes 70 - zwischen der ersten Seitenfläche 14 und der Seitenwand 48 - radial nach außen geführt. Die an den Mittenbereich 40 des Dichtelementes 32 angeordneten Abstandshalter 50 sind dabei derart ausgelegt, dass sie das Kühlmittel 78 in radialer Richtung passieren lassen. Nachdem das Kühlmittel 78 am radial äußeren Ende des ersten Raumes 70 angelangt ist, strömt dieses wieder in Axialrichtung und umspült dann den zwischen der Plattform 57 und dem tannenbaumförmigen Fuß 55 der Laufschaufel 58 angeordneten Laufschaufelhals kühlend.

Um Leckagen aus dem ersten Raum 70 in den zweiten Raum 72 zu vermeiden, liegt das Dichtelement 32 mit seiner Anlagefläche 46 an der gegenüberliegenden Fläche 31 des Vorsprungs 28 dicht an.

Da das Dichtelement 32 sowohl an der Innenkante 34 der Dichtungsnut 24 als auch mit seiner Außenkante 36 in der Plattformnut 69 eingesetzt ist, ist die Laufschaufel 58 gegen eine Verschiebung in Axialrichtung gesichert. Um die auf das Dichtelement 32 wirkenden Verschiebekräfte radial zu verteilen, sind die Abstandshalter 50 auf unterschiedlichen Radien - bezogen auf die Drehachse des Rotors - verteilt. Die Abstandhalter 50 weisen eine derartige Höhe auf, die dem Abstand der Seitenwand 48 zu der ersten Seitenfläche 14 des Rotorabschnitts 12 entspricht, damit sie an den Stirnseiten der Laufschaufelfüße 55 stets anliegen.

Des Weiteren ist in FIG 6 das an einer Rotorscheibe 10 angeordnete Dichtelement 32 dargestellt, unter Ausblendung der Laufschaufel 58. Es ist gezeigt, dass das Dichtelement 32 eine derartige in Umfangsrichtung erstreckende Breite aufweist, dass diese die stirnseitigen Öffnungen von zwei unmittelbar benachbarten Laufschaufelhaltenuten 18 - in Umfangsrichtung betrachtet - vollständig überdeckt.

FIG 8 zeigt einen Querschnitt durch mehrere benachbarte Dichtelemente 32, deren Seitenkanten 42 überlappend aneinander anliegen. Die Seitenkanten 42 der Dichtelemente 32 sind im Vergleich zur Wandstärke des Mittenbereichs 40 nur ungefähr halb so dick ausgebildet. Bei der Montage lassen sich, wie in FIG 8 gezeigt, somit die aneinander liegenden Seitenkanten 42 benachbarter Dichtelemente 32 überlappen, so dass die beiden Räume 70, 72 effizient voneinander getrennt werden können. Obwohl zwischen benachbarten Dichtelementen 32 ein geringfügiger Spalt vorhanden sein kann, ist dieser Spalt labyrinthartig ausgebildet, so dass bei auftretenden Leckagen Strömungswirbel verursacht werden, die den Leckagestrom weiter begrenzen.

In FIG 8 sind Dichtelemente 32 mit unterschiedlich ausgestaltete Seitenkanten 32 dargestellt, die je nach Ausführung mit "male", "female" oder "alternate" bezeichnet sind. Durch die Verwendung dieser Varianten von Dichtelementen 32 kann selbst das letzte, in die Dichtungsnut 24 einzusetzende Dichtelement 32 ohne weiteres montiert werden.

Insgesamt kann mit der Erfindung eine Befestigung von Laufschaufeln 58 an einem Rotor 65 einer Gasturbine angegeben werden, bei der die in axialen Laufschaufelhaltenuten 18 sitzenden Laufschaufeln 58 gegen eine Verschiebung durch ein stirnseitig an der Rotorscheibe 10 befestigtes Dichtelement 32 zuverlässig gesichert sind. Um eine zuverlässige Abdichtung bei schneller Montierbarkeit und Demontierbarkeit der Dichtelemente 32 und der Laufschaufeln 58 zu erreichen, liegt jedes Dichtelement 32 mit einem an seiner Innenkante 36 angeordneten unterbrechungslosen Anlagefläche 46 an einem stirnseitigen endlos umlaufenden Vorsprung 28 rotorseitig vollständig an.

## Patentansprüche

1. Axialer Rotorabschnitt (12) für einen Rotor (65) einer Turbine,
mit einer äußeren an zwei stirnseitigen ersten Seitenflächen (14) angrenzende Umfangsfläche (16), in der über den Umfang verteilte, sich in Axialrichtung des Rotors (65) erstreckende Laufschaufelhaltenuten (18) für Laufschaufeln der Turbine vorgesehen sind und
mit einer radial weiter innen zu einer der beiden ersten Seitenflächen (14) benachbarten weiteren Umfangsfläche (22), in der zumindest eine radial nach außen offene, in Umfangsrichtung erstreckende Dichtungsnut (24) zur Aufnahme von Dichtelementen (32) vorgesehen ist,
in deren oder über deren Öffnung (20) mindestens ein stirnseitiger Vorsprung (28) vorgesehen ist, der die Öffnung (20) der Dichtungsnut (24) in Umfangsrichtung und in Axialrichtung jeweils zumindest teilweise unter Bildung einer Hinterschneidung (30) überdeckt,
**dadurch gekennzeichnet, dass**
der Vorsprung (28) endlos umlaufend ist.

2. Rotorabschnitt (12) nach Anspruch 1,
bei dem die weitere Umfangsfläche (22) weiter innen liegt als der Nutgrund der Laufschaufelhaltenut (18).

3. Rotorabschnitt (12) nach Anspruch 1 oder 2,
bei dem der Vorsprung (28) radial gesehen zwischen dem Nutgrund der Laufschaufelhaltenuten (18) und dem Nutgrund der Dichtungsnut (24) angeordnet ist.

4. Rotorabschnitt (12) nach Anspruch 1, 2 oder 3,
mit einer in der weiteren Umfangsfläche (22) angeordneten Sicherungsnut (26), welche zur Aufnahme eines oder mehrerer Sicherungsbleche vorgesehen ist.

5. Rotorabschnitt (12) nach einem der vorangehenden Ansprüche,
bei der für jedes zu montierende Dichtelement (32) ein Loch (27) in einer zweiten Seitenfläche (29) vorgesehen ist, welches in Axialrichtung erstreckend die Seitenwände der Sicherungsnut (26) und eine der Seitenwände der Dichtungsnut (24) durchdringt.

6. Rotorabschnitt (12) nach einem der vorangehenden Ansprüche,
bei dem beiderseits der ersten Seitenflächen (14) eine radial weiter innen liegende weitere Umfangsfläche mit jeweils einer Dichtungsnut und einer Sicherungsnut vorgesehen ist.

7. Rotorabschnitt (12) nach einem der vorangehenden Ansprüche,
ausgebildet als Rotorscheibe (10).

8. Dichtelement (32) für einen mit Laufschaufeln bestückten Rotor einer Turbine,
umfassend einen plattenförmigen, im wesentlichen viereckigen Grundkörper (34), der zwischen einer in einer Betriebslage radial innen vorgesehen Innenkante (36) und einer in einer Betriebslage radial außen vorgesehenen Außenkante (38) einen Mittenbereich (40) mit im Wesentlichen gleich bleibender Wandstärke aufweist,
wobei die Innenkante (36) gegenüber dem Mittenbereich (40) eine wulstartige Aufweitung (44) unter Bildung einer Anlagefläche (46) aufweist,
**dadurch gekennzeichnet, dass**
sich die Anlageflächen (46) über die Gesamtlänge der Innenkante (36) erstreckt.

9. Dichtelement (22) nach Anspruch 8,
bei dem im Bereich der Außenkante (38) ein sich quer zur Radialrichtung erstreckender Überhang (54) vorgesehen ist.

10. Dichtelement (32) nach Anspruch 9,
welches mindestens eine am Überhang (54) angeordnete, in Umfangsrichtung verlaufende und nach außen gerichtete Dichtspitze (56) aufweist.

11. Dichtelement (32) nach einem der Ansprüche 8 bis 10, welches im Mittenbereich (40) einen Abstandshalter (50) oder mehrere aufweist.

12. Dichtelement (32) nach einem der Ansprüche 8 bis 11,
mit zwei Seitenkanten (42), die jeweils die Außenkante (38) und die Innenkante (36) miteinander verbinden,
wobei jede Seitenkante (42) eine Wandstärke aufweist, die ungefähr der halben Wandstärke des Mittenbereiches (40) entspricht.

13. Dichtelement (32) nach einem der Ansprüche 8 bis 12, welches im Bereich der Innenkante (36) eine Ausnehmung (63) zur Aufnahme eines Sicherungselements aufweist, mittels dem das Dichtelement (32) im verbauten Zustand eine Verschiebung des Dichtelementes (32) in Umfangrichtung des Rotors (65) verhindert ist.

14. Rotor (65) für ein Turbine,
mit einem Rotorabschnitt (12) nach einem der Ansprüche 1 bis 7,
mit in den Laufschaufelnuten (18) eingesetzten Laufschaufeln (58) und
mit in den Dichtungsnuten (24) eingesetzten Dichtelementen (32) nach einem der Ansprüche 8 bis 13,
**dadurch gekennzeichnet dass**
die Anlagefläche (46) jedes Dichtelements (32) an der von dem Vorsprung (28) gebildeten Hinterschneidung (30) anlegbar ist, um das unter Fliehkrafteinwirkung nach außen strebende Dichtelement (32) am Rotor (65) zu halten.

15. Rotor (65) nach Anspruch 14,
bei dem jede Laufschaufel (58) mit einer Plattform (57) ausgestattet ist, an deren dem Dichtelement (32) zugewandte Plattformunterseite eine in Umfangsrichtung verlaufende Plattformnut (69) vorgesehen ist, in die zumindest eines der Dichtelemente (32) mit seiner Außenkante (38) eingreift, um die Laufschaufel (58) gegen eine Verschiebung entlang ihrer Laufschaufelhaltenut (18) zu sichern.

16. Rotor (65) nach Anspruch 14 oder 15,
bei dem alle Anlageflächen (49) der an einer ersten Seitenfläche (14) des Rotorabschnittes (12) vorgesehenen Dichtelemente (32) einen Dichtring bilden, der am Vorsprung (28) umlaufend liegt.
